# EUROPEAN PATENT SPECIFICATION

(11) **EP 2 525 192 B1**
(45) Date of publication and mention of the grant of the patent: **19.03.2014**
(21) Application number: 12168418.7
(22) Date of filing: 17.05.2012
(51) Int. Cl.: G01D 4/02, G01F 1/06, G01F 3/10, G01F 3/38

(54) **Rotor meter for measuring the amount of gas flowing through a gas pipe**
Rotormeter zum Messen der durch einen Kanal strömenden Gasmenge
Compteur de rotor pour mesurer la quantité de gaz circulant par un conduit

(30) Priority: 18.05.2011 NL 2006800
(43) Date of publication of application: 21.11.2012
(73) Proprietor: Flow Meter Group B.V., 7091 ZZ Dinxperlo (NL); R.B.J. Richards Management BV, 6903 GV Zevenaar (NL)
(72) Inventor: Hoeks, Paulus Josephus Adrianus Petrus, 5711 CZ Someren (NL); Richards, Raymond, 6903 GV Zevenaar (NL)
(74) Representative: Verhees, Godefridus Josephus Maria

(56) References cited:
- WO-A1-2004/020894
- US-A- 3 224 274
- US-A- 3 880 004

## Description

### Field of the invention

The invention relates to a rotor meter for measuring the amount of gas flowing through a gas pipe, the rotor meter comprising a housing having a cylinder wall and two axial side walls, which housing accommodates a measuring chamber, as well as an inlet opening provided in the cylinder wall and an outlet opening provided in the cylinder wall, the rotor meter furthermore comprising at least two rotors located and rotatable in the measuring chamber which have each a rotor shaft bearing-mounted with the end in the side wall of the housing, which rotors are situated during operation in the gas flow between the inlet opening and the outlet opening in such a way that the gas flow causes the rotors to rotate so that a defined volume is moved from the inlet to the outlet. This volume is determined by the dimensions and shape of the rotors.

### State of the art

A rotor meter of this type is generally known, see for example WO 2004/020894 A1. In the known rotor meter the cylinder wall of the housing consists of one or more sections and the side walls are loose sections that are connected to the cylinder wall. The side walls and the cylinder wall require precise manufacturing and should be positioned accurately relative to each other so as to have the rotor rotate accurately inside the housing with a nominal tolerance of the order of 0.15mm between the measuring chamber and the rotors. The dimensional accuracy of the dimensions and positions of the bearing openings in the side walls and the dimensional accuracy of the positions of the positioning pins and positioning holes in and on the cylinder wall and side walls are then to be added together and to meet the prescribed tolerance (approximately 0.15mm). As a consequence of this the cylinder wall and the side walls are to be manufactured with a high degree of precision.

### Summary of the invention

It is an object of the invention to provide a rotor meter of the type defined in the opening paragraph that can be manufactured more cost-effectively than the known rotor meter and possesses the same dimensional accuracy as the known rotor meter. To this end the rotor meter according to the invention is **characterised in that** the side walls of the housing as well as two sections of the cylinder wall extending between the side walls and spaced apart, which accommodate the inlet opening and the outlet opening, are made of one whole and the remaining scale sections of the cylinder wall are releasably connected to this whole. The scale sections are pulled around the side walls in a clearance-free manner. Thanks to the design of the scale sections - extremely rigid in longitudinal direction and flexible in radial direction - an accurate measuring chamber is obtained. The scale sections may be made of aluminium (extrusion), shaped sheet steel or injection moulded plastic. All components that determine the dimensional accuracy of the bearing openings with respect to each other and with respect to the housing are made of a single part and in a single clamping operation. As a result there are no tolerances that need to be added together, so that the required tolerance of the part to be made with one clamping operation may exceed the tolerances of the separate parts which the housing of the known rotor meter is comprised of.

An embodiment of the rotor meter according to the invention is **characterised in that** an envelope is slid over the housing, which envelope is made of a magnetically conducting material. This avoids external magnetic fields being able to disturb the proper functioning of the rotor meter. If this envelope were absent, additionally installed magnets would exert forces on the rotating aluminium rotors (Eddy currents) so that the dimensional accuracy of the meter could be affected from the outside.

It should be observed that a rotor meter provided with an envelope of magnetic material can also be used to advantage in different rotor meters from the rotor meter described hereinbefore.

Preferably, the housing with envelope is slid into an external housing so as to avoid that the envelope can be removed.

### Brief description of the drawings

The following description relating to the appended drawings of an example of embodiment of the rotor meter according to the invention will provide better understanding of how the invention can be realized, in which:
Fig. 1 shows the partially disassembled known rotor meter;
Fig. 2 shows an embodiment of the partially disassembled rotor meter according to the invention; and
Fig. 3 shows the frame of the rotor meter shown in Fig. 2.

### Detailed description of the drawings

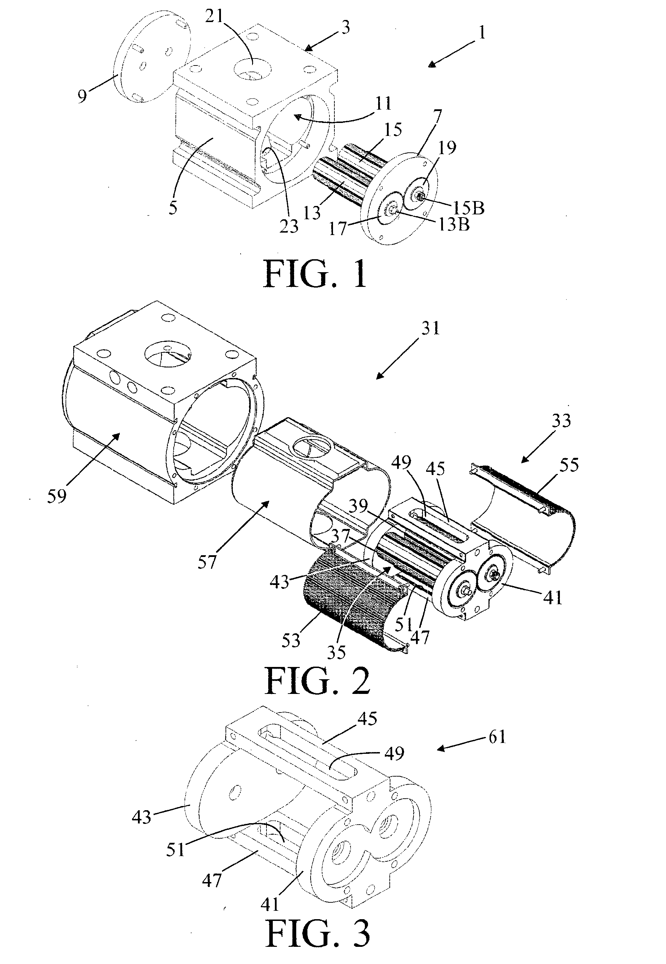

Fig. 1 shows a perspective view of the known rotor meter in which it is shown in a partially disassembled state. The rotor meter 1 comprises a housing 3 which has a cylinder wall 5 and two axial side walls 7 and 9. The housing accommodates a measuring chamber 11 in which two rotatable rotors 13 and 15 are located. Each rotor comprises a rotor shaft 13B, 15B whose ends are bearing-mounted in the side walls of the housing and extend out of the side wall 7 on one side. Gear wheels 17 and 19 are located on these ends and they are in engagement with each other for the mutual synchronisation of the rotors.

An inlet opening 21 and an outlet opening 23 are provided in the cylinder wall 5. The gas flow from the inlet opening to the outlet opening causes the rotors to rotate. The number of revolutions of the rotors is a measure for the amount of gas that has flown through the rotor meter.

The cylinder wall 5 and the side walls 7 and 9 in the known rotor meter are separate component parts that have to be manufactured accurately and are to be assembled accurately with respect to each other in order to be able to meet the accuracy requirements of the rotors bearing-mounted in the housing.

Fig. 2 shows a perspective view of the rotor meter according to the invention in a partially disassembled state. The rotor meter 31 also comprises a housing 33 in which a measuring chamber 35 is located which includes two rotatable rotors 37 and 39. The housing 33 comprises two axial side walls 41 and 43 and a cylinder wall which is constituted by sections 45 and 47 which form bridging pieces and connect the two side walls 41 and 43 together, as well as scaling sections 53 and 55 which have been pulled around the side walls without any clearance and screwed tight against the sections 45 and 47.

The sections 45 and 47 as well as the side walls 41 and 43 are made of one whole. The inlet and outlet openings 49 and 51 respectively are situated in the sections 45 and 47. An envelope 57 is slid over the housing 33 and the housing plus envelope is slid into an external housing 59. The envelope 57 is made of a magnetically conducting material to avoid external magnetic fields disturbing the proper functioning of the rotor meter. If this envelope were absent, externally installed magnets would exert forces on the rotating aluminium rotors (Eddy currents) as a result of which the measuring accuracy of the meter could be affected from the outside.

Fig. 3 shows the frame 61 of the rotor meter which frame is formed by separately shown sections 45 and 47 and side walls 41 and 43. The frame 61 is made of one whole and is milled from a block of aluminium for example in one clamping operation. All components determining the accuracy of the bearing mounting of the rotors in the measuring chamber are located in the frame 61.

Albeit in the foregoing disclosure the invention has been explained with reference to the drawing figures, it should be pointed out that the invention is by no means restricted to the embodiments shown in the drawing figures. The invention also pertains to all embodiments deviating from the embodiments shown in the drawing figures and is solely defined by the claims.

## Claims

1. A rotor meter (31) for measuring the amount of gas flowing through a gas pipe, the rotor meter comprising a housing (33) having a cylinder wall and two axial side walls (41, 43), which housing accommodates a measuring chamber (35) as well as an inlet opening (49) provided in the cylinder wall and an outlet opening (51) provided in the cylinder wall, the rotor meter furthermore comprising at least two rotors (37, 39) located and rotatable in the measuring chamber (35) which have each a rotor shaft bearing-mounted with the ends in the side walls (41,43) of the housing, which rotors (37,39) are situated during operation in the gas flow between the inlet opening (49) and the outlet opening (51) in such a way that the gas flow causes the rotors to rotate so that a defined volume is moved from the inlet to the outlet, **characterised in that** the two axial side walls (41, 43) of the housing (33) as well as two sections (45, 47) of the cylinder wall extending between the two axial side walls (41,43) and spaced apart, which accommodate the inlet opening (49) and the outlet opening (51), are made of one whole (61) and the remaining scale sections (53, 55) of the cylinder wall are releasably connected to this one whole (61).

2. A rotor meter (31) as claimed in claim 1, **characterised in that** an envelope (57) is slid over the housing (33) which envelope is made of a magnetically conducting material.

3. A rotor meter (31) as claimed in claim 2, **characterised in that** the housing (33) with envelope (57) is slid into an external housing (59).

## Patentansprüche

1. Rotamesser (31) zum Messen der Gasmenge, die durch eine Leitung strömt, bestehend aus einem Gehäuse (33) mit einer Zylinderwand und zwei axialen Seitenwänden (41, 43), in welchem Gehäuse sich eine Messkammer (35) befindet, und wobei sich im Zylinderwand eine Einlassöffnung (49) und eine Auslassöffnung (51) befinden, welcher Rotamesser ferner mindestens zwei drehbar in der Messkammer (35) anwesende Laufräder (37, 39) mit je einer Laufwelle enthält, die mit den Enden in den Seitenwänden (41, 43) des Gehäuses gelagert sind, welche Laufräder (37, 39) sich während des Betriebs im Gasstrom zwischen der Einlassöffnung (49) und der Auslassöffnung (51) in der Weise befinden, dass der Gasstrom die Laufräder in Drehung versetzt, wodurch ein definiertes Volumen vom Einlass zum Auslass transportiert wird, **dadurch gekennzeichnet, dass** die beiden Seitenwände (41, 43) des Gehäuses (33) und die sich zwischen diesen Seitenwänden (41, 43) erstreckenden und im Abstand voneinander vorhandenen Teile (45, 47) der Zylinderwand mit den Ein- und Auslassöffnungen (49, 51) aus einem Stück (61) gefertigt sind, und die restlichen Teile der Schale (53, 55) der Zylinderwand abnehmbar mit diesem einen Teil (61) verbunden sind.

2. Rotamesser (31) nach Anspruch 1, **dadurch gekennzeichnet, dass** über das Gehäuse (33) eine Verkleidung (57) aus magnetisch leitendem Werkstoff geschoben ist.

3. Rotamesser (31) nach Anspruch 2, **dadurch gekennzeichnet, dass** das Gehäuse (33) mit Verkleidung (57) in ein Außengehäuse (59) geschoben ist.

## Revendications

1. Rotamètre (31) pour mesurer la quantité de gaz qui s'écoule dans un tuyau, comprenant un boîtier (33) pourvu d'une paroi cylindrique et de deux parois latérales axiales (41,43), boîtier dans lequel se trouve une chambre de mesure (35), ainsi qu'une ouverture d'admission (49) se trouvant dans la paroi cylindrique et une ouverture d'échappement (51) se trouvant dans la paroi cylindrique, lequel rotamètre comprend en outre au moins deux rotors (37,39) tournant et se trouvant dans la chambre de mesure (35) et étant pourvus chacun d'un axe de rotor qui est, en ses extrémités, fixé par roulements aux parois latérales (41,43) du boîtier, lesquels rotors (37,39) se trouvent pendant le fonctionnement dans le flux de gaz entre l'ouverture d'admission (49) et l'ouverture d'échappement (51), de telle manière que le flux de gaz met les rotors en rotation à la suite de quoi un volume défini est déplacé depuis l'admission vers l'échappement, **caractérisé en ce que** les deux parois latérales mentionnées (41,43) du boîtier (33) ainsi que deux parties (45, 47) de la paroi cylindrique s'étendant entre les deux parois latérales mentionnées (41,43) et se trouvant à distance l'une de l'autre, parties dans lesquelles se trouvent les ouvertures d'admission et d'échappement (49, 51), sont réalisées d'une seule pièce (61), et les parties restantes en forme de coque (53, 55) de la paroi cylindrique sont reliées de façon démontable à cette pièce (61) mentionnée.

2. Rotamètre (31) selon la revendication 1, **caractérisé en ce qu'**une gaine (57) faite à partir d'un matériau laissant passer le champ magnétique est glissée autour du boîtier (33).

3. Rotamètre (31) selon la revendication 2, **caractérisé en ce que** le boîtier (33) et sa gaine (57) sont insérés dans un boîtier externe (59).
